# EUROPÄISCHE PATENTSCHRIFT

(11) **EP 4 116 790 B1**
(45) Veröffentlichungstag und Bekanntmachung des Hinweises auf die Patenterteilung: **14.02.2024**
(21) Anmeldenummer: 22182816.3
(22) Anmeldetag: 04.07.2022
(51) Int. Cl.: G05D 1/00, G05D 1/02

(54) **STEUER- UND NAVIGATIONSVORRICHTUNG FÜR EIN AUTONOM BEWEGTES SYSTEM UND AUTONOM BEWEGTES SYSTEM**
AUTONOMOUSLY MOVING SYSTEM AND CONTROL AND NAVIGATION DEVICE FOR AN AUTONOMOUSLY MOVING SYSTEM
DISPOSITIF DE COMMANDE ET DE NAVIGATION POUR SYSTÈME MOBILE AUTONOME ET SYSTÈME MOBILE AUTONOME

(30) Priorität: 05.07.2021 DE 102021117311
(43) Veröffentlichungstag der Anmeldung: 11.01.2023
(73) Patentinhaber: Spleenlab GmbH, 07929 Saalburg-Ebersdorf (DE)
(72) Erfinder: Lewandowski, Benjamin, 99099 Erfurt (DE); Karthigeyan, Sukumar, 07356 Bad Lobenstein (DE); Hagen, Chris, 07356 Bad Lobenstein (DE); Ammapalayam Ravichandran, Ashwanth, 07356 Bad Lobenstein (DE); Milz, Stefan, 07929 Saalburg-Ebersdorf (DE); Ölsner, Florian, 07743 Jena (DE)
(74) Vertreter: Bittner, Thomas L.

(56) Entgegenhaltungen:
- EP-A1- 3 282 335
- WO-A1-2019/094843
- TIAN-ZHU XIANG ET AL: "Mini-UAV-based Remote Sensing: Techniques, Applications and Prospectives", ARXIV.ORG, CORNELL UNIVERSITY LIBRARY, 201 OLIN LIBRARY CORNELL UNIVERSITY ITHACA, NY 14853, 19. Dezember 2018 (2018-12-19), XP080994512,

## Beschreibung

Die Erfindung betrifft ein Steuer- und Navigationsvorrichtung für ein autonom bewegtes System und ein autonom bewegtes System.

### Hintergrund

Als autonom handelnd werden Systeme verstanden, wenn sie ohne direkte menschliche Weisung agieren, komplexe Aufgaben lösen, Entscheidungen treffen, eigenständig lernen und auf unvorhergesehene Ereignisse reagieren können. Bei einem autonom bewegten System erfolgt so das Bewegen oder örtliche Verlagern ohne direkte menschliche Weisung, also basierend auf maschinell bestimmten Steuer- und Navigationssignalen.

Neben klassischen Industrie- und Servicerobotern erreichen insbesondere Transportmittel einen immer höheren Automatisierungsgrad. Die Mobilität der Zukunft wird von autonomen Fahr- und Flugzeugen bestimmt werden. Neben den autonom fahrenden Autos werden auch autonom fliegende Fluggeräte sowohl als unbemannte Drohnen als auch als Personen befördernde Lufttaxen zum Einsatz kommen. Darüber hinaus können auch andere Transportmittel wie beispielsweise Schiffe zukünftig unbemannt navigieren und fahren.

Solche autonomen Systeme müssen allerdings nicht zwingend autark bezüglich der Informationsbeschaffung sein. So benutzen die heute zumeist anzutreffenden autonomen Systeme wie beispielsweise unbemannte Fluggeräte (*"unmanned aerial vehicle",* UAV) nicht ausschließlich die eigenen Sensorik- und Recheneinheiten, sondern sind zwingend auch auf andere Informationsquellen wie eine Cloud, eine IT-Infrastruktur oder die Daten anderer Flug- oder Fahrzeuge angewiesen. Die Abhängigkeit von diesen externen Informationsquellen birgt jedoch die Gefahr in sich, dass die autonom handelnden Systeme in den Fällen, in denen die Verbindung zu den Datenquellen unterbrochen wird oder gar nicht erst möglich ist, ihre Aufgabe nicht erfüllen können und möglicherweise ihr Ziel nicht erreichen.

Es gibt mittlerweile verschiedene Ansätze, um Kraftfahrzeugen, unbemannten Fluggeräten oder sonstigen Automaten einen möglichst hohen Autonomiegrad zu verleihen. Des Weiteren gibt es Lösungsansätze bereits bestehende Fahrzeuge und Fluggeräte mit einer Sensorik-und Recheneinheit nachzurüsten, um diesen bereits existenten Systemen eine Autonomisierung zu ermöglichen, welche sie bauartbedingt nicht besitzen.

So sind Systeme bekannt, bei denen die Sensortechnik und Recheneineinheit in einer an ein System wie einem Fahrzeug oder Fluggerät installiert werden können, so dass die Sensor- und Rechentechniken nicht bereits in den autonomen Systemen vorinstalliert gewesen sein müssen. In den Dokumenten WO 2018 / 140701 A1 und WO 2019 / 018315 A1 ist ein Modul beschrieben, welches an Drohnen angebracht werden kann. Die Module verfügen über mehrere Sensoren wie LiDAR-Scanner und Kamera.

Im Dokument WO 2019 / 222810 A1 ist ein Kartierungs- und Steuersystem offenbart, welches auch an einem Luftfahrzeug als Nutzlast angebracht werden kann. Bei diesem System kommen verschiedene Sensortechniken, wie GPS, LiDAR-Scanner und Kameras zum Einsatz. Des Weiteren verfügt das System über einen Speicher zum Speichern von Flugplandaten, sowie eine Kommunikationsschnittstelle. Letzte stellt eine Verbindung zu einer externen Verarbeitungsvorrichtung her, mit welcher die Positionsdaten und Flugplandaten ausgewertet werden, um für das Luftfahrzeug Steueranweisungen zu generieren, die dann an ein Steuersystem des Luftfahrzeugs über die Kommunikationsschnittstelle zurück übermittelt werden.

Ein Steuerungssystem für autonome Fahrzeuge, das GPS, LIDAR-Scanner und Kameras umfasst, ist auch aus dem Dokument WO 2019/094843 A1 bekannt,

Im Dokument WO 2020 / 014740 A1 wird ein Verfahren zur Erkundung und Kartierung einer Umgebung beschrieben, wobei das Verfahren unter Verwendung eines Luftfahrzeugs und eines Benutzerverarbeitungssystems durchgeführt wird, das drahtlos mit dem Luftfahrzeug kommuniziert, wenn sich das Luftfahrzeug innerhalb seines Kommunikationsbereichs befindet.

Der Nachteil dieser Lösungen ist jedoch, dass den Luftfahrzeugen bei Abbruch der drahtlosen Kommunikationsverbindung oder in Umgebungen, in denen eine solche Verbindung erst gar nicht hergestellt werden kann, der autonome Flug deutlich erschwert oder je nach Datenlage sogar unmöglich gemacht wird. Vor allem in schwer zugänglichen Regionen, die nicht flächendeckend mit einer Drahtlosverbindung ausgestattet sind, wäre daher ein autonomer Flug nicht zu bewerkstelligen. Das Fluggerät wäre also auf Regionen oder lokalen Begebenheiten beschränkt, in denen die Infrastruktur bereits gut ausgebaut ist. Gerade für schwer zugängliche Gebiete ist es aber umso entscheidender, auch von unbemannten Fluggeräten oder sonstigen autonomen Systemen erreicht zu werden, um beispielsweise wichtige Versorgungsleistungen erbringen zu können.

Im Dokument US 10,489,976 B2 ist ein drohnenbasiertes System zur Untersuchung und Verwaltung von Verkehrsunfällen offenbart, bei welchem verschiedene Sensoren zum Einsatz kommen können. Die Verarbeitung der erfassten Daten für den Verkehrsunfalls soll auch mittels eines neuronalen Netzes möglich sein.

### Zusammenfassung

Aufgabe der Erfindung ist es, eine Steuer- und Navigationsvorrichtung zu schaffen, die bei verschiedenen autonom bewegten System flexibel einsetzbar ist.

Gelöst wird die Aufgabe durch eine Steuer- und Navigationsvorrichtung für ein autonom bewegtes System und ein autonom bewegtes System nach den unabhängigen Ansprüchen 1 und 5. Ausgestaltungen sind Gegenstand von abhängigen Unteransprüchen.

Nach einem Aspekt ist eine Steuer- und Navigationsvorrichtung für ein autonom bewegtes System geschaffen, mit einer Sensorvorrichtung, die eingerichtet ist, Sensordaten zu erfassen, und hierfür Folgendes aufweist: eine LiDAR-Sensoreinrichtung, die für eine 360 Grad-Erfassung eingerichtet ist; eine Fisheye-Kameraeinrichtung, die für eine 360 Grad-Erfassung eingerichtet ist; und eine Radar-Sensoreinrichtung, die für eine 360 Grad-Erfassung eingerichtet ist. Die Steuer- und Navigationsvorrichtung weist weiterhin Folgendes auf: eine Datenverarbeitungseinrichtung mit einer KI-basierten Software-Applikation, die eingerichtet ist, mittels Verarbeiten der Sensordaten Steuersignale zum Navigieren eines autonom bewegten Systems zu bestimmen; und eine Datenkommunikationsschnittstelle, die mit der Datenverarbeitungseinrichtung verbunden und eingerichtet ist, die Steuersignale zum Übertragen an einer Steuer-einrichtung des autonom bewegten Systems bereitzustellen. Die Sensorvorrichtung, die Datenverarbeitungseinrichtung und die Datenkommunikationsschnittstelle sind an einem Montagebauteil angeordnet, welches eingerichtet ist, die Sensorvorrichtung, die Datenverarbeitungseinrichtung und die Datenkommunikationsschnittstelle zusammen als gemeinsame Baugruppe an dem autonom bewegten System lösbar zu montieren.

Nach einem weiteren Aspekt ist ein autonom bewegtes System geschaffen, bei dem an einem Systemkörper die Steuer- und Navigationsvorrichtung lösbar montiert ist.

Die Ausführung der Steuer- und Navigationsvorrichtung mit dem Montagebauteil an dem sämtliche Modul- oder Vorrichtungskomponenten angeordnet sind, ermöglicht eine flexible Montage und Demontage an autonom bewegten Systemen unterschiedlicher Bauart. Insbesondere ist so auch eine Nachrüstung des autonom bewegten Systems mit der Steuer- und Navigationsvorrichtung für eine autonome Steuerung möglich. Die hierfür notwendigen Komponenten zum Detektieren der Sensorsignale und deren Verarbeitung sind zusammen als Baueinheit oder -gruppe mit der Steuer- und Navigationsvorrichtung und als Gesamtheit montierbar.

Die Sensorvorrichtung, die Datenverarbeitungseinrichtung und die Datenkommunikationsschnittstelle können in und / oder an einem an dem Montagebauteil gebildeten, gemeinsamen Vorrichtungsgehäuse angeordnet sein.

Die Sensorvorrichtung kann weiterhin Folgendes aufweist: Nah-Infrarot-Sensoreinrichtung, die für eine 360 Grad-Erfassung eingerichtet ist, und GPS-Sensoreinrichtung.

Die Sensoreinrichtung über einen Datenbus mit der Datenverarbeitungseinrichtung verbunden ist.

Das Steuer- und Navigationsvorrichtung verfügt über eine integrierte Künstliche Intelligenz, zum Beispiel mittels eines neuronalen Netzes. Die Datenverarbeitungseinrichtung kann mittels der KI-basierten Software-Applikation eingerichtet sein, unabhängig von anderen externen Recheneinheiten außerhalb der Steuer- und Navigationsvorrichtung die für die Navigation und der Steuerung des autonomen Systems notwendigen Datenverarbeitungsprozesse (an Bord des autonomen bewegten Systems) auszuführen.

Das neuronale Netz kann ausgebildet sein, sämtliche mittels der Sensoreinrichtung erfassten Signale derart zu verarbeiten, dass aus den unterschiedlichen Datensätzen eine einheitliche 3D-Umgebungskarte projiziert wird. Die einzelnen Sensortechniken wie LiDAR-Scanner, Fisheye-Kamera und Radar liefern unterschiedliche Bild- und Signaldaten für die Umgebung des autonomen bewegten Systems, deren Qualität jeweils abhängig sind von äußeren Faktoren wie Sichtverhältnisse, Wetter und Tageszeit. Mittels der KI-basierten Software-Applikation wird hieraus mit Hilfe einer Datenfusion eine 3D-Umgebungskarte bestimmt, welche die Grundlage für Navigation und Steuerung des autonom bewegten Systems bildet.

Auf Basis der fusionierten Daten ermittelt die KI-basierten Software-Applikation einen für den vorgegebenen Bewegungs- oder Flugplan möglichen und vorteilhaften Weg.

Hierfür werden Steueranweisungen erzeugt, welche an das Steuerungssystem des autonomen Systems über die Kommunikationsschnittstelle übertragen werden. Das Steuerungssystem wird veranlasst, errechnete Manöver auszuführen und dadurch den gespeicherten Bewegungsplan autark auszuführen.

Die verschiedenen Arten von Sensoren der Sensoreinrichtung liefern unterschiedliche Sensordaten, welche sich je nach Umfeld und äußeren Gegebenheiten ergänzen. Mittels der Klbasierten Software-Applikation können diese unterschiedlichen Sensordaten zu einer einheitlichen 3D-Umgebungskarte fusionieren, welche aufgrund der Vielzahl an verschiedenen Daten ein möglichst genaues Abbild der Umwelt bietet.

Je nach Einsatzgebiet und Ausgestaltung eignet sich die Steuer- und Navigationsvorrichtung für die Verwendung bei autonom fliegenden Fluggeräten, autonom fahrenden Landfahrzeugen, autonom fahrenden Wasserfahrzeug sowie autonom handelnden Robotern. Selbst an bereits bestehende Systeme kann die Steuer- und Navigationsvorrichtung angebracht werden und mittels der Kommunikationsschnittstelle verbunden werden.

Bei der Steuer- und Navigationsvorrichtung können eine oder mehrere Maßnahmen zur (weiteren) Gewichtsminderung vorgesehen sein. Hierzu gehört zum Beispiel die Verwendung von FPGA-Chips für die Hardware, auf welcher die KI-basierten Software-Applikation läuft. Auch kann für die Datenkommunikation ein Flachbussystem zum Einsatz kommen, beispielweise ein Flachbandbussystem. Die LiDAR-Sensoreinrichtung kann mittels eines LiDAR-Festkörpersystems ausgebildet sein. Die Fisheye-Kameraeinrichtung kann in gewichtsreduzierter Bauform ausgeführt sein, zum Beispiel frei von einem Kühlgehäuse.

Die Steuer- und Navigationsvorrichtung kann als Gesamtbaueinheit oder gemeinsame Baugruppe (mit dem Montagebauteil) mit einem Gesamtgewicht von höchstens etwa 1 kg ausgeführt sein.

Die Steuer- und Navigationsvorrichtung (mit dem Montagebauteil) kann als Gesamtbaueinheit oder gemeinsame Baugruppe platzsparende maximale Außenabmessungen (L x B x H) von etwa 25cm x 25cm x 25 cm aufweisen.

### Beschreibung von Ausführungsbeispielen

Nachfolgend werden weitere Ausführungsbeispiele unter Bezugnahme auf Figuren einer Zeichnung erläutert. Hierbei zeigen:
- Fig. 1: eine schematische perspektive Darstellung einer Steuer- und Navigationsvorrichtung für ein autonom bewegtes System und
- Fig. 2: eine schematische Darstellung von funktionellen Komponenten der Steuer- und Navigationsvorrichtung.

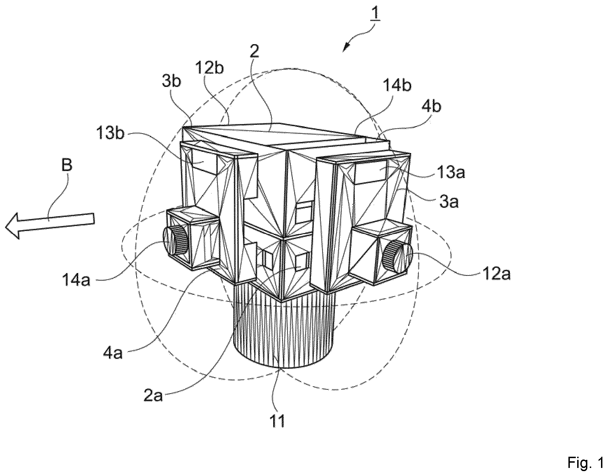

Fig. 1 zeigt eine schematische perspektivische Darstellung einer Steuer- und Navigationsvorrichtung 1 für ein autonom bewegtes System mit einem Gehäuse 2. Das Gehäuse 2 nimmt bei der gezeigten Ausführungsform sämtliche funktionelle Komponenten der Steuer- und Navigationsvorrichtung 1 auf. Das Steuer- und Navigationsvorrichtung 1 kann so als gesamte Baugruppe an dem autonom bewegten System (nicht dargestellt) montiert und demontiert werden.

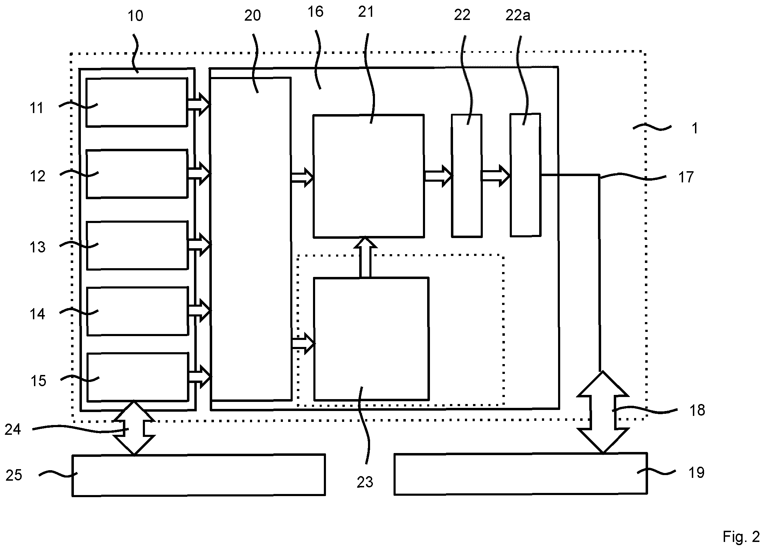

Fig. 2 zeigt eine schematische Darstellung der funktionellen Komponenten der Steuer- und Navigationsvorrichtung 1. Hierzu gehören eine Sensorvorrichtung 10 aufweisend: LiDAR-Sensoreinrichtung 11, die für eine 360 Grad-Erfassung eingerichtet ist; Fisheye-Kameraeinrichtung 12, die für eine 360 Grad-Erfassung eingerichtet ist; Radar-Sensoreinrichtung 13, die für eine 360 Grad-Erfassung eingerichtet ist; Nah-Infrarot-Sensoreinrichtung 14, die für eine 360-Grad-Erfassung eingerichtet ist; sowie GPS-Sensoreinrichtung 15. Mit Hilfe der Sensoreinrichtung 10 werden Sensorsignale oder -daten für die Umgebung des autonom bewegten Systems erfasst, an dem die Steuer- und Navigationsvorrichtung 1 montiert ist.

Bei der Steuer- und Navigationsvorrichtung 1 ist die LiDAR-Sensoreinrichtung 11 für die 360 Grad-Erfassung gemäß Fig. 1 in einem unteren Bereich angeordnet. Die Fisheye-Kameraeinrichtung 12 weist zur 360-Erfassung auf gegenüberliegenden Seite 3a, 3b eine jeweilige Fisheye-Kamera 12a, 12b (verdeckt) auf. Vergleichbar ist die Nah-Infrarot-Sensoreinrichtung 14 mit Nah-Infrarot-Sensoren 14a, 14b in Beobachtungsrichtung B auf einer Vorderseite 4a und einer Rückseite 4b gebildet.

Oberhalb der Fisheye-Kamera 12a und des Nah-Infrarot-Sensors 14a ist ein jeweiliger Radar-Sensor 13a, 13b angeordnet. Weitere Radarsensoren sind vergleichbar auf der gegenüberliegenden Seite 3b sowie der Rückseite 14b vorgesehen.

Zum Führen von Kabeln aus dem Gehäuse 2 sind Kabelöffnungen 2a gebildet.

Mittels einer Datenverarbeitungseinrichtung 16 mit einem oder mehreren Prozessoren werden die Sensordaten verarbeitet (vgl. Fig. 2), um Steuersignale zum Navigieren des autonom bewegten Systems zu erzeugen und an einer Datenkommunikationsschnittstelle 17 bereitzustellen, so dass die Steuersignale über einen Datenbus 18 an eine Steuereinrichtung 19 des autonom bewegten Systems übertragen werden können, um dieses in der Umgebung zu navigieren.

Die Datenverarbeitungseinrichtung 16 implementiert mittels entsprechender Hardware- und Softwarekonfiguration mehrere funktionelle Komponenten oder Module: Sensorfusions-Modul 20, Wahrnehmungs- und Lokalisierungs-Modul 21, Modul zum Bestimmung eines Umgebungsmodells 22, Pfadplanungs-Modul 22a sowie ein KI-basiertes Wahrnehmungs-Modul 23.

Mit dem Sensorfusions-Modul 20 wird eine Aufbereitung oder Vorbereitung der mittels Sensorvorrichtung 10 erfassten Mess- oder Sensorsignale für deren anschließende (Weiter-)Verarbeitung ausgeführt. Hierbei kann vorgesehen sein, die Mess- oder Sensorsignale räumlich und / oder zeitlich zu kalibrieren. Mess- oder Sensorsignale können mittels an sich bekannter Kalibrierungsverfahren zum Beispiel in einem gemeinsamen Koordinatensystem verortet werden, beispielweise das Koordinatensystem des autonom bewegten Systems, sei es zum Beispiel ein landfahrzeug, ein Wasserfahrzeug oder ein Luftfahrzeug. In zeitlicher Hinsicht können Mess- oder Sensorsignale zeitlich konsistent auf eine gemeinsame Taktung kalibriert werden.

Alternativ oder ergänzend kann eine Überwachung und / oder eine Artefakt-Reduktion ausgeführt werden. Zur Artefakt-Reduktion kann beispielsweise eine Low-Level Prozessierung vorgesehen sein, zum Beispiel zum Reduzieren von falsch-positiven Detektionen mit der LiDAR-Sensoreinrichtung 11 bei Nebel und / oder Spritzwasser. Die Low-Level Prozessierung kann mittels einer deterministischen Prozessierung ausgeführt werden. Ein weiteres Beispiel für eine Artefakt-Reduktion ist ein sogenanntes Balancing, um nachtielige Effekte aufgrund eines extremen Gegenlichts in den Bildaufnahmen der Fisheye-Kameraeinrichtung 12 zu reduzieren.

Für die Mess- oder Sensorsignale können ein oder mehrere Rohdatenströme erzeugt werden. Es kann vorgesehen sein, eine oder mehrere Rohdatenströme aus Sicherheitsgründen zu separieren. In einer Ausführung werden fusionierte Rohdatenströme ausschließlich für die Verarbeitung in dem KI-basierten Wahrnehmungs-Modul 23 bereitgestellt und genutzt.

Im KI-basierten Wahrnehmungs-Modul 23 werden vom Sensorfusions-Modul 20 empfangene Daten mittels KI-basierter Algorithmen analysiert. Insbesondere kann dies Daten ausgehend von den Mess- oder Sensorsignalen der folgenden Sensoreinrichtungen betreffen: LiDAR-Sensoreinrichtung 11, Fisheye-Kameraeinrichtung 12 und / oder Radar-Sensoren 13a, 13b. Hierbei kann ein neuronales Netz für jedes Modul genutzt werden, welches, ausgehend von den Daten basierend auf den Sensorsignalen, jeweils Klassifikation, geometrische Umgebung (insbesondere Abstände von Objekten) und / oder dynamische Umgebung (insbesondere Bewegung oder Nicht-Bewegung der Objekte) das autonom bewegte System vorhersagt.

Die Umgebungswahrnehmung im Wahrnehmungs- und Lokalisierungs-Modul 21 erfolgt auf Lokalisierung (eigene Position), geometrische Umgebung (Abstände von Objekte, zum Beispiel LiDAR-Punktewolke), Klassifikation (Art der Objekte) und Dynamik (Bewegung der Objekte oder statisch).

Sodann wird mittels Pfadplanungs-Modul 22a basierend auf einem räumlichen Umgebungsmodell, welches zuvor mit Hilfe des Moduls zum Bestimmung eines Umgebungsmodells 22 ermittelt wurde, ein Bewegungspfad für das autonom bewegte System bestimmt, um den Bewegungspfad anzeigende Daten über die Datenkommunikationsschnittstelle 17 an die Steuereinrichtung 19 des autonom bewegten Systems zu geben.

Über eine Datenschnittstelle 24 können Daten und Signale mit einem oder mehreren externen Einrichtungen 25 ausgetauscht werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Steuer- und Navigationsvorrichtung (1) für ein autonom bewegtes System, mit
- einer Sensorvorrichtung (10), die eingerichtet ist, Sensordaten zu erfassen, und hierfür Folgendes aufweist:
- eine LiDAR-Sensoreinrichtung (11), die für eine 360 Grad-Erfassung eingerichtet ist;
- eine Fisheye-Kameraeinrichtung (12), die für eine 360 Grad-Erfassung eingerichtet ist; und
- eine Radar-Sensoreinrichtung (13), die für eine 360 Grad-Erfassung eingerichtet ist;
- einer Datenverarbeitungseinrichtung (16) mit einer KI-basierten Software-Applikation (23), die eingerichtet ist, mittels Verarbeiten der Sensordaten Steuersignale zum Navigieren eines autonom bewegten Systems zu bestimmen; und
- einer Datenkommunikationsschnittstelle (17), die mit der Datenverarbeitungseinrichtung (16) verbunden und eingerichtet ist, die Steuersignale zum Übertragen an eine Steuereinrichtung des autonom bewegten Systems bereitzustellen;
**dadurch gekennzeichnet, dass** die Sensorvorrichtung (10), die Datenverarbeitungseinrichtung (16) und die Datenkommunikationsschnittstelle (17) an einem Montagebauteil (2) angeordnet sind, welches eingerichtet ist, die Sensorvorrichtung (10), die Datenverarbeitungseinrichtung (16) und die Datenkommunikationsschnittstelle (17) zusammen als gemeinsame Baugruppe an dem autonom bewegten System lösbar zu montieren.

2. Steuer- und Navigationsvorrichtung (1) nach Anspruch 1, **dadurch gekennzeichnet, dass** die Sensorvorrichtung (10), die Datenverarbeitungseinrichtung (16) und die Datenkommunikationsschnittstelle (17) in und / oder an einem an dem Montagebauteil (2) gebildeten, gemeinsamen Vorrichtungsgehäuse (3) angeordnet sind.

3. Steuer- und Navigationsvorrichtung (1) nach Anspruch 1 oder 2, **dadurch gekennzeichnet, dass** die Sensorvorrichtung (10) weiterhin Folgendes aufweist: Nah-Infrarot-Sensoreinrichtung (14), die für eine 360 Grad-Erfassung eingerichtet ist, und GPS-Sensoreinrichtung (15).

4. Steuer- und Navigationsvorrichtung (1) nach mindestens einem der vorangehenden Ansprüche, **dadurch gekennzeichnet, dass** die Sensorvorrichtung (10) über einen Datenbus mit der Datenverarbeitungseinrichtung (16) verbunden ist.

5. Autonom bewegtes System, bei dem an einem Systemkörper eine Steuer- und Navigationsvorrichtung (1) nach mindestens einem der vorangehenden Ansprüche lösbar montiert ist.

6. Autonom bewegtes System nach Anspruch 5, ausgewählt aus der folgenden Gruppe: autonom fliegendes Fluggerät, autonom fahrendes Landfahrzeug, autonom fahrendes Wasserfahrzeug und autonom zu bewegender Roboter.

## Claims

1. A control and navigation device (1) for an autonomously moving system, with
- a sensor device (10), which is configured to acquire sensor data, and has the following for this purpose:
- a LiDAR sensor device (11), which is configured for a 360 degree acquisition;
- a fisheye camera device (12), which is configured for a 360 degree acquisition; and
- a radar sensor device (13), which is configured for 360 degree acquisition;
- a data processing device (16) with an Al-based software application (23), which is configured to determine control signals for the navigation of an autonomously moving system by processing the sensor data; and
- a data communication interface (17), which is connected to the data processing device (16), and is configured to provide the control signals for transmission to a control device of the autonomously moving system;
**characterised in that**
the sensor device (10), the data processing device (16) and the data communication interface (17) are arranged on a mounting component (2), which is configured to mount the sensor device (10), the data processing device (16), and the data communication interface (17) together as a common assembly on the autonomously moving system in a detachable manner.

2. The control and navigation device (1) according to Claim 1, **characterised in that**, the sensor device (10), the data processing device (16), and the data communication interface (17) are arranged in and/or on a common device housing (3) arranged on the mounting component (2).

3. The control and navigation device (1) according to Claim 1 or 2, **characterised in that**, the sensor device (10) further comprises the following: a near-infrared sensor device (14), which is configured for a 360 degree acquisition, and a GPS sensor device (15).

4. The control and navigation device (1) according to at least one of the preceding claims, **characterised in that**, the sensor device (10) is connected to the data processing device (16) via a data bus.

5. An autonomously moving system, in which a control and navigation device (1) according to at least one of the preceding claims is mounted on a system body in a detachable manner.

6. The autonomously moving system according to Claim 5, selected from the following group: autonomously flying aircraft, autonomously travelling land vehicle, autonomously travelling water vehicle, and autonomously moving robot.

## Revendications

1. Dispositif de commande et de navigation (1) pour un système à déplacement autonome, comportant
- un dispositif de capteur (10) qui est configuré pour enregistrer des données de capteur et qui présente ici les éléments suivants :
- un dispositif de capteur LiDAR (11), qui est configuré pour une capture à 360 degrés ;
- un dispositif de caméra fisheye (12) configuré pour une capture à 360 degrés ; et
- un dispositif de capteur radar (13) qui est configuré pour une capture à 360 degrés ;
- un dispositif de traitement de données (16) doté d'une application logicielle basée sur IA (23), qui est configuré pour déterminer des signaux de commande pour naviguer dans un système se déplaçant de manière autonome en traitant les données de capteur ; et
- une interface de communication de données (17) qui est connectée au dispositif de traitement de données (16) et est configurée pour fournir les signaux de commande à transmettre à un dispositif de commande du système à déplacement autonome ;
**caractérisé en ce que** le dispositif de capteur (10), le dispositif de traitement de données (16) et l'interface de communication de données (17) sont disposés sur un élément de montage (2) qui est conçu afin de monter de manière amovible le dispositif de capteur (10), le dispositif de traitement de données (16) et l'interface de communication de données (17) en tant qu'ensemble commun sur le système à déplacement autonome.

2. Dispositif de commande et de navigation (1) selon la revendication 1, **caractérisé en ce que** le dispositif de capteur (10), le dispositif de traitement de données (16) et l'interface de communication de données (17) sont disposés dans et/ou sur un des éléments de montage (2) des boîtiers d'appareil communs (3).

3. Dispositif de commande et de navigation (1) selon la revendication 1 ou 2, **caractérisé en ce que** le dispositif de capteur (10) présente en outre les éléments suivants : un dispositif de capteur (14) proche infrarouge, qui est configuré pour une capture à 360 degrés, et un dispositif de capteur GPS (15).

4. Dispositif de commande et de navigation (1) selon au moins une des demandes précédentes, **caractérisé en ce que** le dispositif de capteur (10) est connecté via un bus de données au dispositif de traitement de données (16).

5. Système à déplacement autonome, dans lequel un dispositif de commande et de navigation (1) selon au moins une des revendications précédentes est monté de manière amovible sur un corps de système.

6. Système à déplacement autonome selon la revendication 5, choisi dans le groupe suivant : avion volant de manière autonome, véhicule terrestre à conduite autonome, embarcation à conduite autonome et robot se déplaçant de manière autonome.
